Europäisches Patentamt

European Patent Office

Office européen des brevets

(19)

(11) Publication number:

**0 329 420**
**A2**

# EUROPEAN PATENT APPLICATION

(12)

(21) Application number: **89301451.4**

(22) Date of filing: **15.02.89**

(51) Int. Cl.4: **G 06 F 12/06**

(30) Priority: **19.02.88 GB 8803926**

(43) Date of publication of application:
**23.08.89 Bulletin 89/34**

(84) Designated Contracting States:
**BE CH DE FR IT LI NL SE**

(71) Applicant: **GEC PLESSEY TELECOMMUNICATIONS LIMITED**
**P.O. Box 53 Telephone Road**
**Coventry, CV3 1HJ (GB)**

(72) Inventor: **Lumb, Anthony Peter**
**63 Merlin Avenue**
**Nuneaton Warwickshire (GB)**

**Mills, Michael John**
**47 Common Lane**
**Kenilworth Warwickshire (GB)**

**Williams, Howard**
**18 Sunnyside Close Chapelfield**
**Coventry Warwickshire (GB)**

(74) Representative: **MacKenzie, Ian Alastair Robert**
**The General Electric Company, p.l.c. Central Patent**
**Department Wembley Office Hirst Research Center East Lane**
**Wembley Middlesex HA9 7PP (GB)**

(54) Memory addressing system.

(57) The invention concerns a memory addressing system suitable for digital telephone exchanges. It comprises a plurality of modules interconnected by a synchronous bus (0, 1), the modules including at least two main processor units (CPU 10A - 10D), at least one input/output processor unit (11A, 11B), and at least two dynamic RAM memory modules (12A - 12G), the memory modules together providing a physical address space greater than the address range available. Each processor module (CPU) is connected in parallel with the bus (0, 1) to first static RAM arrays (30) which are each associated with said memory modules (12A - 12G), each of said first static RAM arrays (30) being connected to a second static RAM array (35) in turn connected to the assoicated memory module (12A - 12G). The second static RAM arrays (35) contain translation tables relating to the address space of the assoicated memory module. When a processor module wishes to access a memory module a sequence is followed in which the processor module outputs both an address onto said bus and data to the first static RAM array associated with the memory module the processor module wishes to access, the first static array outputting to the second static array connected to it data defining sections of the memory space available to the memory module to be accessed, this data being combined with part of the data output to the bus by the processor module, the remainder of the address being provided by the remainder of the address range enabled on the bus by the processor module making the access.

Fig.1.

## Description

### MEMORY ADDRESSING SYSTEM

The present invention concerns a memory addressing system particularly suited to the main processors of a digital telephone exchange.

A typical digital telephone exchange may have four main processors and two input/output processors co-operating with a plurality of storage units. The processors and storage units can be referred to as modules with the modules being interconnected by duplicated synchronous buses. In one example each bus will contain 22 address bits and 16 data bits with 16 bits being defined as a word.

A problem arises because of the limited address range available to each of the processor modules. With 22 address bits available each processor module can address 4 Megawords. Thus each module can address either a single 4 Megaword storecard or several storecards of reduced capacity. In a typical system having seven storecards each storecard has accordingly been limited to 0.5 inwords.

The present invention has for an object effectively to increase the address range available to a processor unit in a memory addressing system of the kind just described.

Accordingly the present invention consists in a memory addressing system comprising a plurality of modules, interconnected by a synchronous bus, the modules including at least two main processor units at least one input/output processor unit and at least two dynamic RAM memory modules, the memory modules together providing a physical address space greater than the address range available to individual processor modules, and wherein each processor module is connected in parallel with the bus to first static RAM arrays which are each associated with one of said memory modules, each said first static RAM array being connected to a second static RAM array in turn connected to the associated memory module, said second static RAM arrays containing translation tables relating to the address space of the associated memory module, the system being such that when a processor module wishes to access a memory module a sequence is followed in which the processor module output outputs both an address onto said bus and data to the first static RAM array associated with the memory module which the processor module wishes to access, the first array outputting to the second static RAM array connected to it data defining sections of the memory space available in the memory module to the accessed, this data being combined with part of the data output to the bus by the processor module, the second static RAM array in response to their data outputting to its associated memory module part of the address required to access the memory module, the remainder of the address being provided by the remainder of the address range enabled on the bus by the processor module making the access.

Preferably the memory address system has duplicated synchonous buses. These may be implemented using TTL technology.

In accordance with another feature of the invention each module has an individual address and is operative to monitor said bus for said address. the access sequence commencing when a memory module detects a match with its address and the presence on the bus of valid commands.

In order that the invention may be more readily understood, an embodiment thereof will now be described by way of example and with reference to the accompanying drawings, in which:

Figure 1 is a block diagram of a memory addressing system according to the present invention, and

Figure 2 is a block diagram showing part of the system of Figure 1 in greater detail.

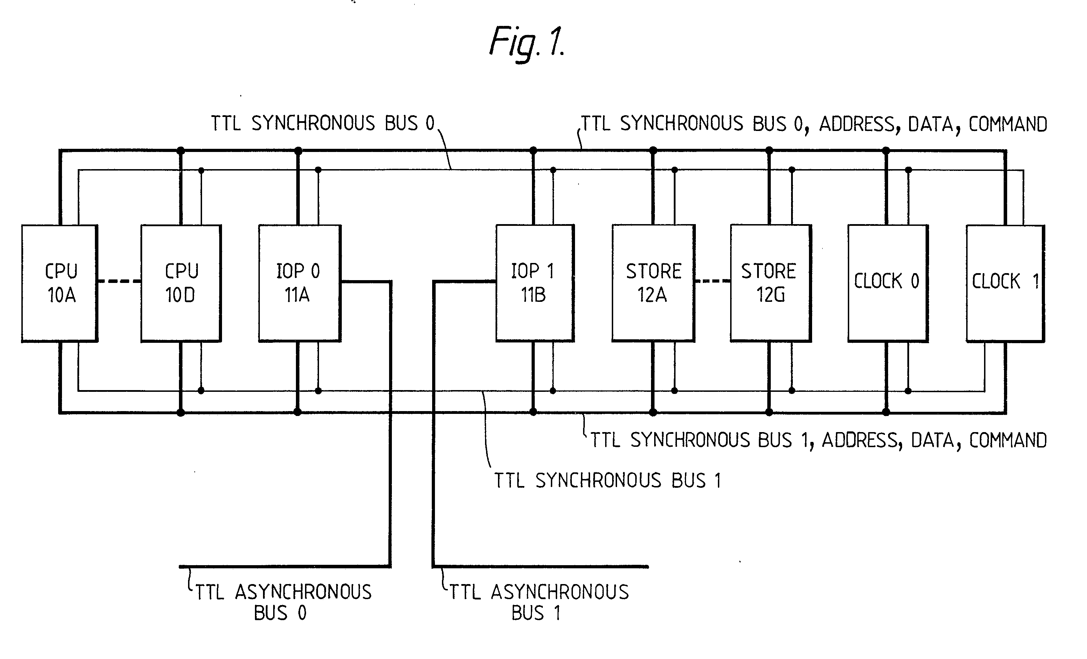

Referring now to Figure 1 of the drawings this shows four main processor units or CPUs' 10A - 10D, two input/out processor 11A, 11B, seven storage units 12A - 12G normally called storecards and duplicated clock units CLOCK 0 and CLOCK 1. Timing signals for the various modules making up the system are supplied by clock units CLOCK 1 and 0 over duplicated synchronous buses 1 and 0.

Each of the synchronous buses (0 or 1) has 22 address bits plus parity and 16 data bits plus parity. Furthermore each bus also contains 5 command lines, these being respectively Read, Write, Read/Clear, Maintenance Read and Maintenance Write.

Finally each bus also contains a transfer validation signal, a response line which is used to indicate the success or failure of a bus access, and 6 Grant code lines. Each of the modules in the system is allocated a unique Grant Code and enables this code onto one of the two buses whenever the module also drives the address and data lines of the bus. The grant code lines are implemented using Open Collector technology drives so that should a module become faulty and enable address/data onto the bus at the wrong time the grant codes received by the destination module will be invalid as they will consist of a combination of two grant codes.

In previous systems of this type the address range available on the buses limited the storecards 12A - 12G to 0.5 MWord capacity and the storecards only checked the grant codes for a valid CPU or 1/0P code. However in the embodiment being described each storecard has a capacity of 4Mwords and uses a received grant code to establish translations from a physical bus address to a dynamic RAM address which can be unique to one of the processor modules.

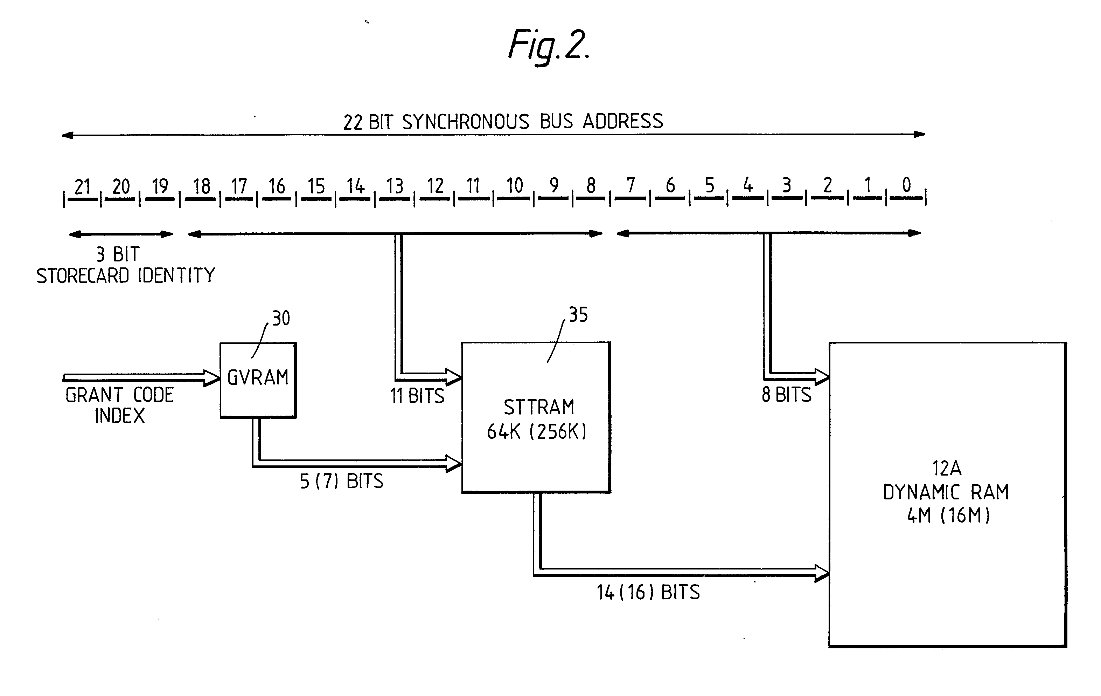

In order to achieve this each storecard is associated with an individual first static RAM array which is connected to the processor modules in parallel to the two main synchronous buses 0 and 1. This additional data line is shown in Figure 1 at 25. In a preferred embodiment a first static RAM array and a second RAM array storage translation tables are physically incorporated in the individual storecards. Figure 2 of the drawings shows the actual relationship between a synchronous bus, in this case bus 1, a first static RAM 30, a second static RAM 35 and storecard 12A.

There will now be described the sequence followed when a processor module wishes to access one of the storecards.

A sequence of time slots are defined by the clock 0 or 1 and during a specified time slot all the storecards 12A - 12G monitor one of the duplicated buses 0 or 1 for its unique address. In the present embodiment this address is defined by the top three bus address bits 19, 20 and 21 as shown on the 22 bit synchonous bus address. When a storecard detects a match between its unique address and the top three bus bits together with a valid command (Read, Write, or Read/Clear) that storecard begins the access sequence.

The start of this access sequence is the application of certain parts of the selected bus grant code to the address of a first static RAM 30 which is a small fast static RAM array. On receipt of this data array 30 outputs 11 bits of data plus a single parity bit to the second static RAM array 35. Of these 11 bits 7 are associated with the particular processor module performing the storecard access. This data will be referred to as the Bank value and in the present embodiment only 5 of the 7 bits are valid on the 4 Mwords storecard. Thus there are 32 possible Bank values. The 5 bits of Bank value output by array 30 are then combined with 11 bus address bits. These are bits 8 -18 of the 22 bus address bits. The 16 bits so generated are then applied to the second static RAM array 35. The RAM array 35 has a 64K capacity. In this way the 4 Mwords address space of the storecard can be divided into sections or banks each containing a maximum of 2K (2 to the power of 11) adress translations. The array 35 provides 16 data outputs plus a single parity bit of which 14 are combined with the remaining 8 bits on the 22 bit bus address. These remaining bits are bit 0 - 7. This combination generates the 22 bits necessary to address the 4 Mword memory space of the selected storecard. The unused two bits from the two arrays 30, 35 allow for an expansion in the size of array 35 to 256 K words and of the storecards to 16 Mword arrays.

In the system described a means has to be provided for setting up the two RAM arrays 30 and 35 and also for enabling direct accesses of the storecards in a manner which does not involve the use of the translation tables stored in the 64 K static array 35. These requirements, in the present embodiment, are achieved by extracting 11 page addresses from the internal address range of each storecard. This reduces the number of translations available to one of the processor modules from 2048 (2K locations) down to 2037. However these facilities do not affect the size of Synamic RAM address available to a processor module, this size being maintained in the unexpanded form at 4 Mwords. However a security check can be implemented into each storecard to check on the data stored in the second array 35. This indicates that a translation stored in array 35 is undefined and hence should not have been used by a processor module. This security measure removes one page from the maximum dynamic RAM range of each store card of 16 Mwords.

In the embodiment being described the data in the two static RAM arrays 30 and 35 can only be set up by a main processor unit 10A -10D, not one of the input/output processor 11A, 11B

## Claims

1. A memory addressing system comprising a plurality of modules interconnected by a synchronous bus (0, 1), the modules including at least two main processor units (CPU 10A - 10D), at least one input/output processor unit (11A, 11B), and at least two dynamic RAM memory modules (12A - 12G), the memory modules together providing a physical address space greater than the address range available, and characterised in that each processor module (CPU) is connected in parallel with the bus (0, 1) to first static RAM arrays (30) which are each associated with said memory modules (12A - 12G), each of said first static RAM arrays (30) being connected to a second static RAM array (35) in turn connected to the associated memory module (12A -12G), said second static RAM arrays (35) containing translation tables relating to the address space of the associated memory module, the system being such that when a processor module wishes to access a memory module a sequence is followed in which the processor module outputs both an address onto said bus and data to the first static RAM array associated with the memory module the processor module wishes to access, the first static array outputting to the second static array connected to it data defining sections of the memory space available to the memory module to be accessed, this data being combined with part of the data output to the bus by the processor module, the remainder of the address being provided by the remainder of the address range enabled on the bus by the processor module making the access.

2. A memory address system as claimed in Claim 1 and characterised in that each module has an individual address and has means for monitoring said bus for said address.

3. A memory address system as claimed in Claim 2, and characterised in that said bus (0, 1) includes a plurality of Grant Code Lines (25) on which the individual addresses of the modules are carried, each of said first static arrays (30) being connected to said Grant code lines (25).

4. A memory addressing system as claimed in Claim 3, and characterised in that a said first static array (30) on receipt of a valid address from said bus (0, 1) outputs to the second static RAM (35) associated therein a plurality of bits associated with the particular processor requiring access which are combined with a plurality of bits from said bus to provide an address for said second static RAM array, said second static RAM array being divided into sections each containing address translations.

5. A memory addressing system as claimed in Claim 4, and characterised in that each said second static RAM array (35) is operative to output in response to the combined address received from said bus and the associated first static RAM array a further set of address bits which when combined with the unused bits on said bus are capable of addressing the desired dynamic memory module.

Fig.1.

TTL SYNCHRONOUS BUS 0          TTL SYNCHRONOUS BUS 0, ADDRESS, DATA, COMMAND

| CPU 10A | CPU 10D | IOP 0 11A | | IOP 1 11B | STORE 12A | STORE 12G | CLOCK 0 | CLOCK 1 |

TTL SYNCHRONOUS BUS 1, ADDRESS, DATA, COMMAND

TTL SYNCHRONOUS BUS 1

TTL ASYNCHRONOUS BUS 0

TTL ASYNCHRONOUS BUS 1

EP 0 329 420 A2

# Fig.2.

22 BIT SYNCHRONOUS BUS ADDRESS

| 21 | 20 | 19 | 18 | 17 | 16 | 15 | 14 | 13 | 12 | 11 | 10 | 9 | 8 | 7 | 6 | 5 | 4 | 3 | 2 | 1 | 0 |

3 BIT
STORECARD IDENTITY

GRANT CODE
INDEX

30
GVRAM

5 (7) BITS

11 BITS

35
STTRAM
64K (256K)

14 (16) BITS

8 BITS

12A
DYNAMIC RAM
4M (16M)

EP 0 329 420 A2